Europäisches Patentamt

European Patent Office

Office européen des brevets

(19)

(11) Numéro de publication: **0 042 793**
**B1**

(12) **FASCICULE DE BREVET EUROPEEN**

(45) Date de publication du fascicule du brevet: **19.10.83**

(51) Int. Cl.³: **C 04 B 1/08**

(21) Numéro de dépôt: **81400979.1**

(22) Date de dépôt: **18.06.81**

(54) Installation pour l'extinction des cendres volantes hydrauliques et produits équivalents.

(30) Priorité: **20.06.80 FR 8013924**

(43) Date de publication de la demande:
**30.12.81 Bulletin 81/52**

(45) Mention de la délivrance du brevet:
**19.10.83 Bulletin 83/42**

(84) Etats contractants désignés:
**AT BE CH DE FR GB IT LI LU NL SE**

(56) Documents cités:
**FR - A - 1 270 700**
**FR - A - 1 312 537**

(73) Titulaire: **Jadot, Gérard**
**F-13590 Meyreuil Village (FR)**

(72) Inventeur: **Jadot, Gérard**
**F-13590 Meyreuil Village (FR)**

(74) Mandataire: **Polus, Camille et al,**
**c/o Cabinet Lavoix 2, Place d'Estienne d'Orves**
**F-75441 Paris Cedex 09 (FR)**

Courier Press, Leamington Spa, England.

EP 0 042 793 B1

Installation pour l'extinction des cendres volantes hydrauliques et produits équivalents

La présente invention est relative à l'extinction à l'eau chaude des cendres volantes hydrauliques et des produits équivalents.

On sait que les cendres volantes hydrauliques sont recueillies dans les dépoussiéreurs de centrales thermiques brûlant des lignites ou des carbons maigres; elles contiennent de la chaux libre anhydre dont l'extinction assure l'obtention d'un liant hydraulique et leurs qualités hydrauliques sont dues à la clinkérisation de la gangue argilo-calcaire des combustibles par la flamme des brûleurs des centrals thermiques. Par produits équivalents, on entend des produits de composition ou de propriétés équivalents mais ne résultant pas nécessairement de la combustion, tels que ceux existant à l'état natif dans le sol, et comprenant, après cuisson, à côté de composants siliceux et alumineux, de la chaux libre anhydre ou de la magnésie libre anhydre. Dans la suite, on utilisera pour des raisons de brièveté, uniquement la terme "cendres volantes hydrauliques", étant entendu que ce terme recouvre aussi les produits équivalents tels que définis ci-dessus.

On sait que pour l'obtention d'un liant hydraulique à partir des cendres volantes, il convient de procéder à leur extinction par de l'eau chaude après les avoir chauffées, généralement à la vapeur, récuperée lors du processus d'extinction (FR—A—7372537). Tous les procédés et installations de traitement connus à cet effet exigent une important consommation d'énergie ainsi qu'un matériel annexe complexe comprenant des chaudières d'appoint, des agitateurs et transporteurs, qui sont une source d'ennui, d'entretien et de surveillance et qui, à leur tour, consomment de l'énergie.

L'invention a pour but de supprimer ces inconvénients en éliminant les appareillages annexes tels que chaudières d'appoint, agitateurs mécaniques, fluidificateurs, éléments transporteurs auxiliaires,... A cette fin, elle utilise les calories et l'excédent des vapeurs dégagées lors de l'extinction d'une charge pour alimenter en énergie une autre charge et assurer l'évacuation pneumatique de celles-ci. Ceci permet un traitement continu économique et en circuit fermé—donc non polluant—des cendres volantes brutes.

Elle a ainsi pour objet une installation pour l'extinction des cendres volantes hydrauliques et produits équivalents par action d'eau chaude après leur chauffage, au moyen de vapeur d'eau récupérée lors du processus d'extinction comprenant des cuves pourvues d'une alimentation en cendres volantes et d'une alimentation en eau chaude et d'un circuit de vapeur d'eau, caractérisée en ce qu'elle comprend une série d'autoclaves reliés chacun à un circuit fermé commun de vapeur d'eau muni de moyens permettant la communication sélective, d'une part, de chacun des autoclaves avec ce circuit et, d'autre part, de ces autoclaves se trouvant à des stades différents du processus cyclique d'extinction entre eux, en vue de récupérer ainsi la chaleur et la vapeur dégagées lors de ce processus, chaque autoclave comportant un plongeur pour l'évacuation des cendres éteintes sous l'action de la pression de la vapeur générée par le processus.

La communication de chacun des autoclaves avec ce circuit de vapeur peut être réalisée sélectivement ou conjointement à la base et au sommet de l'autoclave. L'alimentation à la base de l'autoclave a pour effet d'amener les cendres volantes à la température appropriée d'extinction par l'eau chaude et, en même temps, de fluidifier celles-ci pour favoriser leur contact avec l'eau chaude, ces cendres se présentant ainsi sous forme d'un lit fluidifié. La communication avec le sommet de l'autoclave contribue au chauffage des cendres, à l'établissement de la pression nécessaire à l'évacuation des cendres éteintes et à l'établissement de la liaison avec d'autres autoclaves ce trouvant à d'autres stades du processus, aux fins de récupération de l'énergie excédentaire de l'extinction.

De fait, après un apport initial de chaleur, soit à partir d'une chaudière auxiliaire, soit si on veut se dispenser de celle-ci, par traitement initial de charges au moyen d'eau froide, les charges ainsi improprement traitées étant mises au rebut, l'installation peut non seulement être autosuffisante en ce qui concerne l'énergie thermique, mais produire même une énergie excédentaire récupérable. Il est en effet possible de récupérer complémentairement de l'énergie en prévoyant dans chaque autoclave une double enveloppe calorifugée dans laquelle on fait circuler l'eau destinée à l'extinction et qui se réchauffe ainsi lors du passage dans cette double enveloppe. D'autre part, de la chaleur peut être récupérée au moyen d'un condenseur à partir de la vapeur ayant servi à l'évacuation des cendres éteintes et servir au chauffage de l'eau d'extinction, soit comme unique source de chaleur soit, mieux, comme source de chaleur s'ajoutant à celle provenant du passage de l'eau dans la double enveloppe des autoclaves.

D'autres charactéristiques et avantages de l'invention ressortiront de la description qui va suivre, faite en référence aux dessins annexés donnés à titre d'exemples non limitatifs d'une des formes de réalisation de l'objet de l'invention. Sur des dessins:

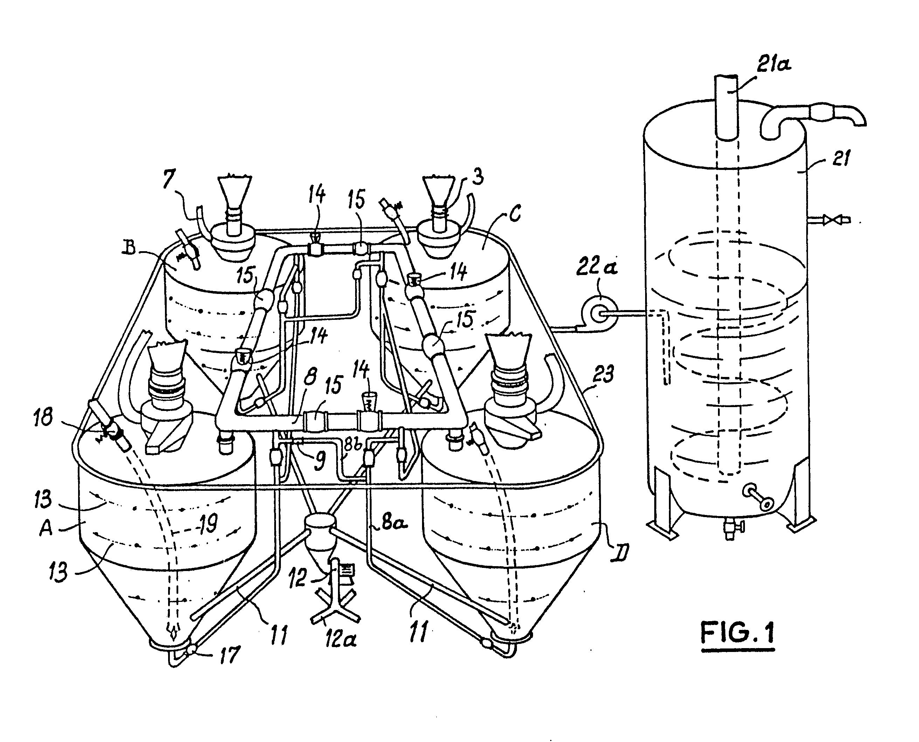

— la Fig. 1 est une vue en perspective des éléments essentiels d'une installation selon l'invention et, notamment, de la batterie d'autoclaves qui en est le coeur,

— la Fig. 2 est une vue schématique en coupe de l'un de ces autoclaves, et

— la Fig. 3 est une vue schématique représentant l'ensemble de l'installation.

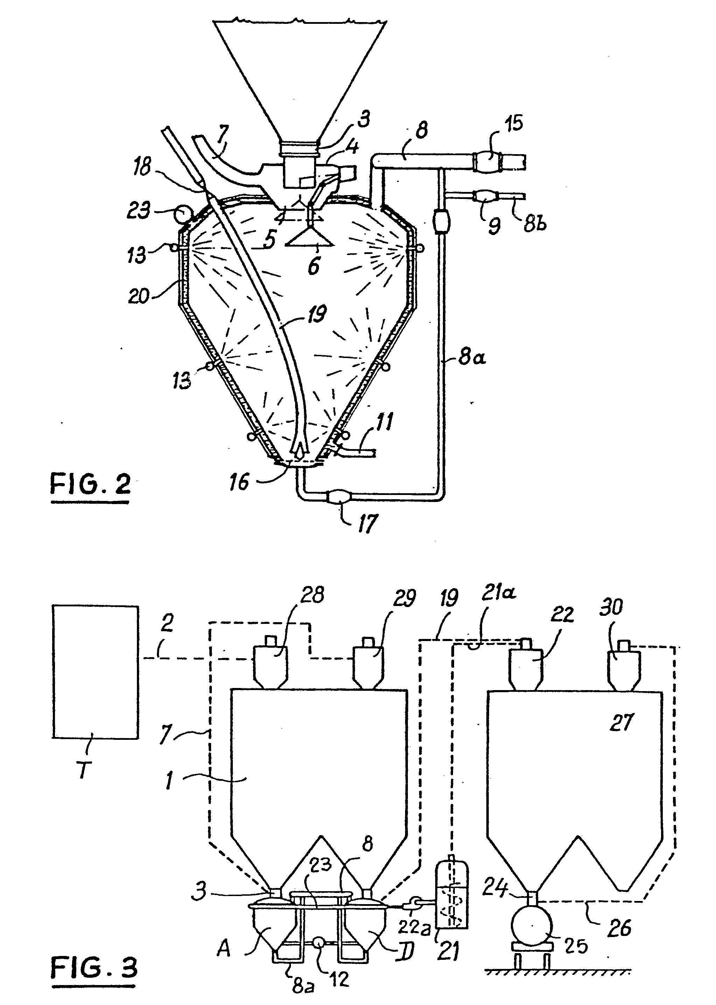

Selon le mode de réalisation représenté (Fig. 3), l'installation comprend un silo 1 de stockage des cendres volantes, qui reçoit celles-ci d'une centrale thermique T, par l'intermédiaire d'une canalisation 2 aboutissant au silo 1 à travers un filtre classique 28. Le silo 1 sert à alimenter en cendres volantes une batterie d'autoclaves, au nombre de quatre dans le mode de réalisation représenté, soit A, B, C et D. L'alimentation se fait par une gaine 3 raccordée à la base de la trémie par une liaison souple et dont la communication avec cette trémie est sous la dépendance d'une vanne à papillon. La gaine 3 débouche dans une tête d'alimentation 4 s'ajustant hermétiquement dans un orifice prévu au sommet de chaque autoclave. Cette tête débouche dans l'autoclave par une ouverture 5, qui peut être obturée par une cloche 6 à commande pneumatique ou électrique. Une canalisation 7 partant de la tête 4 permet l'évacuation de l'air contenu dans l'autoclave et elle est reliée au sommet du silo 1 par l'intermédiaire d'un filtre classique 29.

L'installation comprend un circuit de vapeur fermé sur lui-même. A cet effet, le sommet chaque autoclave est relié à un collecteur de vapeur 8, chaque tronçon de collecteur entre deux autoclaves successifs comprenant une soupape de sûreté 14 et un clapet anti-retour 15. A la base de chaque autoclave, pourvue d'une grille de retenue 16, débouche un tube d'alimentation en vapeur 8a monté en dérivation sur le collecteur 8 et pourvu d'un clapet antiretour 17. Chaque tube 8a est relié au tube homologue de l'autoclave précédent par une prise de vapeur 8b sur laquelle est monté un robinet 9. Un tube plongeur d'évacuation 19 débouche à une extrémité dans chaque autoclave au-dessus de la grille 16, comporte sur sa partie extérieure à l'autoclave une vanne d'arrêt 18 et débouche à son autre extrémité dans un réservoir de stockage 27 au travers d'un filtre 22.

Ce filtre sépare la vapeur résiduelle et l'envoie à travers un tube 21a dans un appareil 21 jouant à la fois de rôle de condenseur et d'accumulateur d'eau pour le circuit d'eau de l'installation. Cet accumulateur—qui est équipé d'une soupape de sûreté, avec une purge haute et basse pour l'évacuation des dépôts éventuels—alimente en effet en eau la double enveloppe 20 dont est muni chaque autoclave. A cet effet, il est prévu un collecteur d'eau 23, alimenté à partie de l'accumulateur 21 par un pompe 22a et débouchant à la partie haute de chaque double enveloppe 20. Cette eau est reprise à la base de chaque double enveloppe 20 par une canalisation 11, par laquelle elle est extraite grâce à une pompe 12 et envoyée par des dérivations 12a à une série de distributeurs circulaires 13 injectant cette eau à plusieurs niveaux dans chacun des autoclaves. Ces distributeurs circulaires peuvent être remplacés par tout dispositif équivalent, tel qu'une conduite plongeant dans l'autoclave et munie d'une série de buses d'injection à différents niveaux.

La réservoir de stockage 27 des cendres éteintes comporte à sa base un dispositif de chargement 24 muni d'un circuit d'aspiration des poussières renvoyées au sommet du silo 27 par une conduite 26 munie d'un filtre 30. Sous chacun des dispositifs de chargement 24 peut être amené un réservoir de transport tel que la citerne 25 d'un camion.

Le fonctionnement de l'installation est le suivant. L'extinction des cendres volantes est réalisée selon un processus cyclique, chacun des autoclaves se trouvant à un instant donné à un stade différent du processus. C'est ainsi que le processus comprend quatre stades, le remplissage de l'autoclave, le chauffage de ce dernier, l'extinction des cendres volantes et la vidange de l'autoclave. Dans ce qui suit on admettra que les autoclaves A, B, C, D sont respectivement à chacun de ces stades. Un apport initial de chaleur ayant été fait à la mise en route de l'installation ainsi qu'on l'a vu précédemment, celle-ci est prête à fonctionner. La cendre volante est extraite à la base du silo 1 et chargée successivement par la gaine 3 dans les autoclaves A, B, C, D après ouverture de la cloche 6 correspondante. Au cours de ce remplissage, l'évacuation de l'air contenu dans l'autoclave correspondant s'effectue par la conduite 7. L'autoclave A étant au stade de remplissage, c'est l'autoclave C qui est au stade d'extinction. Ainsi qu'on le verra plus loin, cette opération d'extinction dégage une énergie thermique qui est mise à profit pour chauffer l'autoclave B au stade de chauffage. A cet effet, la vapeur en provenance de l'autoclave C, la vanne 9 correspondante étant ouverte, est admise par le collecteur 8 et les canalisations 8b et 8a, à la base de la cuve B. Au bout des quelques secondes nécessaires à l'évacuation de l'air résiduel, la cloche 6 est fermée et la vapeur qui a prisi le relais de l'air maintient la cendre volante en émulsion, cette cendre se trouvant ainsi sous forme de lit fluidisé au-dessus de la grille 16. La pression monte rapidement dans l'autoclave B; lorsqu'elle atteint 2, 5 bars on ferme la vanne 9, la température étant à ce moment dans l'autoclave d'environ 100°C. La cendre brute est alors prête pour l'extinction à l'eau chaude, cette opération étant pendant ce temps en cours de déroulement dans l'autoclave C.

Pour assurer cette extinction à l'eau chaude, la pompe 12 reprend l'eau réchauffée dans les doubles enveloppes 20 de chacun des autoclaves et assure son injection sous 8 à 10 bars dans l'autoclave C en cours d'extinction par l'intermédiaire des canalisations 12a et des distributeurs circulaires 13 munis de pulvérisateurs. La quantité d'eau injectée est contrôlée, par exemple, par l'intermédiaire de débitmètres, compte tenu de la teneur en chaux vive des cendres volantes et du poids de la charge de l'autoclave, étant entendu que la réactivité de la chaux vive n'intervient pratiquement pas. Le poids de la charge peut être déterminé en usant de jauges de contrainte ou mieux, en disposant une trémie-peseuse entre le silo 1 et les autoclaves. L'extinction sous l'influence de cette addition d'eau chaude se produit et on constate une accélération rapide de la température et de la pression. A 5,5 bars, la température atteint 160°C et c'est à ce moment qu'est ouverte la vanne 9 pour alimenter en vapeur et chauffer l'autoclave B ainsi qu'on l'a vu précédemment. Dès que le chauffage de B est terminé la vanne 9 est refermée et la pression continue à monter dans l'autoclave C en extinction.

A une pression de tarage supérieure à 5,5 bars, par exemple 6 bars, la soupape de sûreté 14 s'ouvre et permet à la vapeur de refouler le clapet anti-retour 15 et de se diriger à la fois par le collecteur 8 et par le clapet anti-retour 17 vers l'autoclave qui est en cours de vidange, à savoir l'autoclave D, par sa propre vapeur résiduelle résultant de l'extinction précédente. L'admission de la vapeur de l'autoclave C vers l'autoclave D, qui correspond à un excès de pression dans l'autoclave C en extinction, compense dans l'autoclave D la baisse de pression résultant de la consommation de la vapeur résiduelle dans cet autoclave en cours de vidange.

Dès que la soupape de sécurité 14 de l'autoclave C se referme à une pression inférieure ou égale à la pression de tarage, l'extinction dans cet autoclave est terminée. On ouvre alors la vanne 18 pour que le refoulement de la cendre volante éteinte se fasse vers le silo de stockage 27 par l'intermédiaire de la conduite 19 qui est calorifugée. Du silo 27, le liant hydraulique ainsi obtenu peut être chargé sur des camions citernes 25 sans dégagement de poussières.

Le processus continue ensuite à se dérouler cycliquement, les stades étant permutés dans les divers autoclaves. C'est ainsi que A passe au stade de chauffage, B au stade d'extinction, C au stage de vidange et D au stade de remplissage. Le cycle permet ainsi d'être en extinction continue, les légers temps morts entre les autres stades permettant d'exécuter les manoeuvres diverses telles qu'ouvertures ou fermetures des vannes, etc . . .

Bien qu'il soit avantageux de fonctionner avec des autoclaves au nombre de quatre ou d'un multiple de quatre, compte tenu des quatre stades du processus, ceci n'est pas une obligation car il est possible d'aménager le temps des divers stades pour fonctionner avec un nombre d'autoclaves différent, par exemple, trois.

On notera que l'énergie dégagée par l'extinction est récupérée au maximum, la vapeur dégagée servant à chauffer un autoclave précédent et contribuant à la vidange d'un autoclave suivant, avant d'assurer celle de l'autoclave en cours d'extinction.

L'énergie résiduelle de la vapeur servant à assurer la vidange des autoclaves est par ailleurs elle-même récupérée dans l'accumulateur-condenseur 21 et contribue à chauffer l'eau d'extinction, au même titre que les calories récupérées dans les doubles enveloppes 20 des autoclaves. En fait, l'opération génère un excédent d'énergie puisque l'expérimentation du procédé a montré que l'on pouvait récupérer 26 KW à la tonne traitée, alors qu'auparavant les procédés utilisés consommaient, pour l'extinction, 50 KW par tonne traitée.

Il convient par ailleurs de souligner que l'extinction se fait selon l'invention en circuit fermé et ne dégage aucune fumée ou vapeur dans l'environnement.

Il va de soi que l'invention n'est pas limitée au mode de réalisation décrit et représenté. C'est ainsi que les formes, dimensions et dispositions des différents éléments pourront varier dans la limite des équivalents sans s'écarter pour cela de la conception générale de l'invention qui vient d'être décrite.

**Revendications**

1. Installation pour l'extinction des cendres volantes hydrauliques et produits équivalents par action d'eau chaude après leur chauffage au moyen de vapeur d'eau récupérée lors du processus d'extinction, comprenant des cuves pourvues chacune d'une alimentation en cendres volantes, d'une alimentation en eau chaude et d'un circuit de vapeur d'eau, caractérisée en ce que ces cuves sont contituées par une série d'autoclaves (A, B, C, D) reliés chacun à un circuit fermé commun de vapeur d'eau (8, 8a, 8b) muni de moyens (9, 14, 15, 17) permettant la communication sélective, d'une part, de chacun des autoclaves avec ce circuit et, d'autre part, des ces autoclaves se trouvant à des stades différents du processus cycliquie d'extinction entre eux, en vue de récupérer ainsi la chanleur et la vapeur dégagées lors de ce processus, chaque autoclave comportant un plongeur (19) pour l'évacuation des cendres éteintes sous l'action de la pression de la vapeur générée par le processus d'extinction.

2. Installation selon la revendication 1, caractérisée en ce que ce circuit comporte un collecteur de vapeur (8) débouchant dans chaque autoclave à la partie haute de celui-ci et divisée en autant de tronçons que d'autoclaves par des soupapes (14, 15) s'ouvrant sous une pression de référence atteinte dans un autoclave en cours d'extinction pour alimenter an autre autoclave en cours d'évacuation, chacun de ces tronçons comportant une dérivation (8a) munie d'un clapet (17) débouchant à la base de l'autoclave correspondant sous une grille (16) de maintien de la charge, ces dérivations (8a) étant reliées deux à deux par des prises de vapeur (8b) pourvues de vannes (9), dont l'ouverture assure le chauffage et la fluidification des cendres, avant l'extinction, par la vapeur provenant d'un autre autoclave en cours d'extinction.

3. Installation selon la revendication 1 ou 2, caractérisée en ce que le plongeur (19) de chaque autoclave débouche au sommet d'un silo de stockage (27) par l'intermédiaire d'un filtre (22) séparant la vapeur ayant servi à l'évacuation des cendres éteintes, qui est canalisée (21a) dans un condenseur (21) à eau pour récupérer son énergie thermique.

4. Installation suivant la revendication 1 ou 2, caractérisée en ce que chaque autoclave comporte une double enveloppe (20) dans laquelle circule, pour se réchauffer, l'eau servant à l'extinction.

5. Installation suivant les revendications 3 et 4, caractérisée en ce qu'un collecteur d'eau (23) relie le condenseur (21) au sommet de chaque double enveloppe dont la base est reliée par une canalisation collectrice (11) à une pompe d'injection (12) d'eau chaude dans chaque autoclave.

6. Installation suivant la revendication 5, caractérisée en ce que des distributeurs (13) circulaires pourvus de buses d'injection sont prévus à diverses hauteurs dans l'autoclave pour l'injection d'eau chaude.

7. Installation suivant la revendication 5, caractérisée en ce qu'un tube plongeur pourvu de buses d'injection étagées est prévu dans chaque autoclave pour l'injection d'eau chaude.

8. Installation suivant l'une quelconque des revendications précédentes, caractérisée en ce que le dispositif d'alimentation en cendres volantes de chaque autoclave comporte une tête débouchant au sommet de celui-ci par une ouverture (5) obturable hermétiquement, cette tête comportant au-dessus de cette ouverture une gaine (3) comme dispositif de liaison avec un silo (1) et une canalisation (7) de mise à l'air libre aboutissant au sommet de ce silo.

**Patentansprüche**

1. Vorrichtung zum Löschen hydraulischer Flugasche und ähnlicher Produkte durch Einwirkung von heißem Wasser nach ihrer Er-wärmung mittels beim Löschvorgang wieder-gewonnenen Wasserdampfs, mit Wannen, von denen jede mit einer Flugaschenzufuhr, einer Heißwasserzufuhr und einem Wasserdampfkreis versehen ist, dadurch gekennzeichnet, daß die Wannen durch eine Reihe von Autoklaven (A, B, C, D) gebildet sind, von denen jeder mit einem gemeinsamen geschlossenen Wasserdampfkreis (8, 8a, 8b) verbunden ist, welcher mit Mitteln (9, 14, 15, 17) versehen ist, welche einerseits die selektive Verbindung eines jeden der Autoklaven mit diesem Kreis und andererseits dieser in verschiedenen Stadien des zyklischen Löschprozesses sich befindenden Autoklaven untereinander gestatten, um sowohl die Wärme als auch den Dampf, die bei diesem Prozeß freigesetzt werden, wiederzugewinnen, wobei jeder Autoklav ein Tauchelement (19) zum Abziehen der gelöschten Asche unter der Wirkung des Druckes des durch den Löschprozeß erzeugten Dampfes aufweist.

2. Vorrichtung nach Anspruch 1, dadurch gekennzeichnet, daß der Kreis einen Dampfsammler (8) aufweist, der in jeden Autoklaven im oberen Teil desselben mündet und durch Ventile (14, 15), die sich bei einem in einem Autoklaven während des Löschvorgangs erreichten Bezugsdruck zur Speisung eines anderen Autoklaven während des Abziehens öffnen, in so viele Teilstücke unterteilt ist, wie Autoklaven vorhanden sind, wobei jedes Teilstück eine mit einem Sperrventil (17) versehene Abzweigung (8a) aufweist, die an der Basis des entsprechenden Autoklaven unter einem Halterost (16) für die Beschickung mündet, wobei diese Abzweigungen (8a) paarweise durch Dampfentnahmen (8b) verbunden sind, die mit Ventilen (9) versehen sind, deren Öffnen für die Erwärmung und Fluidisierung der Asche vor dem Löschen durch den von einem anderen Autoklaven während des Löschens kommenden Dampf sorgt.

3. Vorrichtung nach Anspruch 1 oder 2, dadurch gekennzeichnet, daß das Tauchelement (19) jedes Autoklaven über einen Filter (22), der den für das Abziehen der gelöschten Asche benutzten Damp abtrennt, der zur Rückgewinnung seiner thermischen Energie in einen Kondensator (21) geleitet (21a) wird, an der höchsten Stelle eines Speichersilos (27) mündet.

4. Vorrichtung nach Anspruch 1 oder 2, dadurch gekennzeichnet, daß jeder Autoklav einen Doppelmantel (20) aufweist, in welchen zur Aufwärmung das Zum Löschen dienende Wasser zirkuliert.

5. Vorrichtung nach den Ansprüchen 3 und 4, dadurch gekennzeichnet, daß eine Wassersammler (23) den Kondensator (21) mit der höchsten Stelle eines jeden Doppelmantels verbindet, dessen Basis über eine Sammelleitung (11) mit einer Einspritzpumpe (12) zum Einspritzen von heißem Wasser in jeden Autoklaven verbunden ist.

6. Vorrichtung nach Anspruch 5, dadurch gekennzeichnet, daß zum Einspritzen von heißem Wasser mit Einspritzdüsen versehene Ringverteiler (13) in verschiedenen Höhen im Autoklaven vorgesehen sind.

7. Vorrichtung nach Anspruch 5, dadurch gekennzeichnet, daß zum Einspritzen von heißem Wasser ein mit gestuften Einspritzdüsen versehenes Tauchrohr in jedem Autoklaven vorgesehen ist.

8. Vorrichtung nach einem der vorstehenden Ansprüche, dadurch gekennzeichnet, daß die Flugaschenzuführvorrichtung jedes Autoklaven einen an der höchsten Stelle desselben über eine dicht verschließbare Öffnung (5) mündenden Kopf aufweist, wobei dieser Kopf über der Öffnung als Verbindungsvorrichtung zu einem Silo (1) eine Hülse (3) und eine zur höchsten Stelle dieses Silos hinführende Entlüftungsleitung (7) aufweist.

## Claims

1. Installation for the extinction of hydraulic flying ashes and equivalent products by hot water action after their heating by water vapor recuperated during the extinction process, including vats, each having a flying ash supply, a supply of hot water, and a water vapor circuit characterized in that the vats are made up of a series of autoclaves (A, B, C, D) each connected to a common water vapor closed circuit (8, 8a, 8b) having means (9, 14, 15, 17) permitting the selective communication, on the one hand, of each of the autoclaves with this circuit and, on the other hand, of these autoclaves, located at different stages of the cyclic extinction process, with each other, in order to then recuperate the heat and vapor releaved during this process, each autoclave including a plunger (19) for evacuating the extinguished ashes under action of the vapor pressure generated by the extinction process.

2. Installation according to Claim 1, characterized in that this circuit a vapor collector, opening into each autoclave at its upper region and divided into as many sections as the autoclaves by valves (14, 15) opening under an attained reference pressure into an autoclave in the process of extinction, for supplying another autoclave in the process of evacuation, each of the sections including a branch (8a) having a valve (17) opening into the base of the corresponding autoclave through a load holding grill (16), these branches (8a) being connected, two by two, by vapor connections (8b) having valves (9), of which the opening assures the heating and fluidification of the ashes prior to extinction, by the vapor coming from another autoclave in the process of extinction.

3. Installation according to Claim 1 or 2 characterized in that the plunger (19) of each autoclave opens into the top of the storage silo (27) by means of a filter (22) separating the vapor which had effected the evacuation of the extinguished ashes, which channeled (21a) into a water condensor (21) for recuperating its heat energy.

4. Installation according to Claim 1 or 2 characterized in that each autoclave includes a double envelope (20) in which circulates, on order to be reheated, the water which serves to effect the extinction.

5. Installation according to Claims 3 and 4 characterized in that a water collector (23) connects the condensor (21) to the top of each double envelope of which the bare is connected by a collecting channel (11) to an injection pump (12) for the hot water in each autoclave.

6. Installation according to Claim 5 characterized in that there are included circular distributors (13) having injection nozzles located at various levels in the autoclave for the injection of hot water.

7. Installation according to Claim 5 characterized in that a plunger tube, having staged injection nozzles, is provided in each autoclave for the injection of hot water.

8. Installation according to any of the preceding claims characterized in that the flying ash supply device of each autoclave includes a head opening into the top of the autoclave by an hermetically closable opening (5), this head having, above this opening, a sleeve (3) as a device connecting with a silo (1) and a canalization (7) for free air leading to the summit of this silo.

FIG.1

FIG. 2

FIG. 3